# EUROPEAN PATENT APPLICATION

(11) **EP 1 187 495 A2**
(43) Date of publication of application: **13.03.2002**
(21) Application number: 01307654.2
(22) Date of filing: 10.09.2001
(51) Int. Cl.: H04N 13/02, H04N 13/04

(54) **Apparatus and method for displaying image data**

(30) Priority: 11.09.2000 JP 2000275305
(71) Applicant: CANON KABUSHIKI KAISHA, Tokyo (JP)
(72) Inventor: Kawai, Tomoaki, c/o Canon Kabushiki Kaisha, Tokyo (JP); Morinaga, Hidehiko, c/o Canon Kabushiki Kaisha, Tokyo (JP); Iizuka, Yoshio, c/o Canon Kabushiki Kaisha, Tokyo (JP); Nagato, Katsutoshi, c/o Canon Kabushiki Kaisha, Tokyo (JP); Sakai, Taro, c/o Canon Kabushiki Kaisha, Tokyo (JP)
(74) Representative: Beresford, Keith Denis Lewis

(57) **Abstract**

An image display apparatus has a data display region on which image data is displayed, and a user interface region on which a plurality of icon images are displayed. The icon images displayed on the user interface region each include a left-eye image and a right-eye image so as to be stereoscopically displayed. The image display apparatus provides stereo vision such that the icon images are projected toward a viewer with respect to a normal state when a cursor implemented as a pointer overlaps the icon images, and the icon images are projected away from the viewer with respect to the normal state when the icon images are clicked.

## Description

### BACKGROUND OF THE INVENTION

### Field of the Invention

The present invention relates to an image display apparatus and a method of displaying image data.

### Description of the Related Art

Typically, three-dimensional data are used in computer graphics, medical imaging such as CT (computed tomography) and MRI (magnetic resonance imaging), molecular modeling, two-dimensional CAD (computer aided design), scientific visualization, etc. Such three-dimensional data are sometimes displayed on stereoscopic image display apparatuses capable of displaying stereo images. Image display apparatuses using the principle of a so-called binocular stereopsis which allows the left and right eyes to view different images each having a parallax have been already put into practical use.

An image display apparatus of this type generally activates a stereoscopic vision function using differences in angle by the lines of sight from both eyes, or in angle of convergence, to provide the visual perception of depth of an object. The image display apparatus achieves stereo vision such that a user may perceive an object having a great angle of convergence to be closer and an object having a smaller angle of convergence to be distant.

Image data from two points of view which uses the principle of binocular stereopsis include a pair of stereo photographic images taken from two points of view by a dual lens camera for use in stereo image photography, and stereo pair images rendered from three-dimensional model data to two-dimensional images at two points of view.

A variety of display methods to stereoscopically display a pair of stereo images from two points of view have been practically used. One display method is an HMD (Head Mounted Display) method which allows different liquid crystal panels to be viewed by the left and right eyes. Another display method is a liquid crystal shutter method in which liquid crystal shutter spectacles are used concurrently with a CRT to allow left and right images associated with the left and right eyes to be alternately displayed. Another display method is a stereoscopic projector method which involves projecting left and right images with light of different polarization, and to allow a user wearing light polarizing spectacles to separately view the left and right images. Another display method is a spectacles-free direct-vision display method which allows images associated with both eyes to be separately viewed when they are observed from a particular position using a combination of a liquid crystal panel and a lenticular lens.

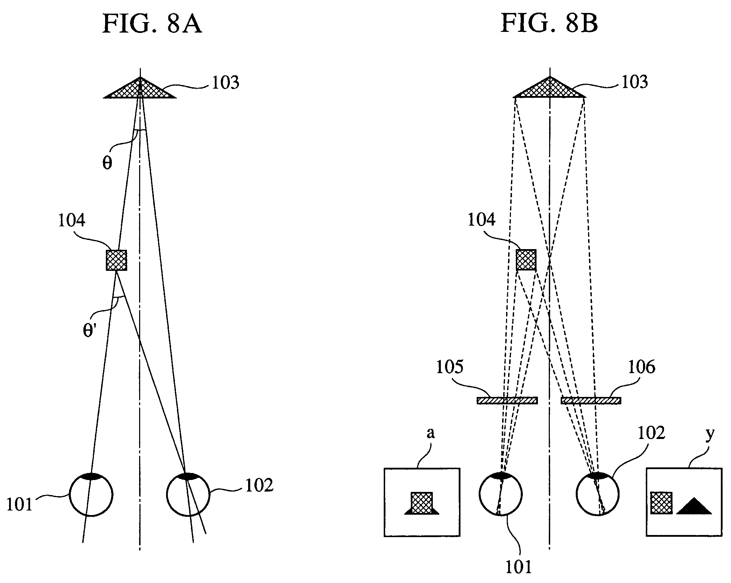

Figs. 8A and 8B illustrate the principle of displaying image data when the HMD method is used.

As shown in Fig. 8A, generally, when objects 103 and 104 are viewed by both eyes 101 and 102, an angle of convergence θ of the distant object 103 is smaller than an angle of convergence θ' of the closer object 104.

In order to achieve stereo vision of the objects 103 and 104, as shown in Fig. 8B, a left-eye liquid crystal panel 105 and a right-eye liquid crystal panel 106 are placed in front of the left eye 101 and the right eye 102, respectively, to allow images of the objects 103 and 104 to be projected thereon. Thus, an image indicated by symbol "a" is directed to the left eye 101, and an image indicated by symbol "y" is directed to the right eye 102. As a result, the user perceives the objects 103 and 104 as if they were located in the same position as that in Fig. 8A when viewed through the liquid crystal panels 105 and 106 by the left and right eyes 101 and 102. Accordingly, the HMD method allows both left and right images to be viewed by either the left eye or the right eye, thereby achieving stereo vision.

Accordingly, in such stereoscopic image display methods, both left and right images are directed to either eye. However, since stereo pair images take a variety of data formats, a data format unique to each of the methods must be used to generate stereo pair images in order to achieve stereo vision.

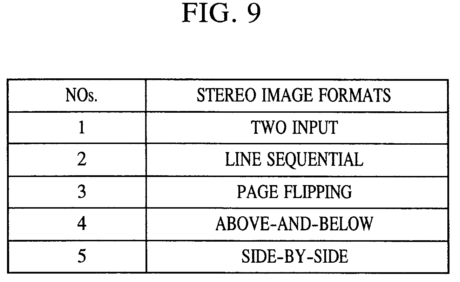

Referring to Fig. 9, exemplary data formats of stereo pair images include a two input format, a line sequential format, a page flipping format, an above-and-below format, and a side-by-side format, as known in the art.

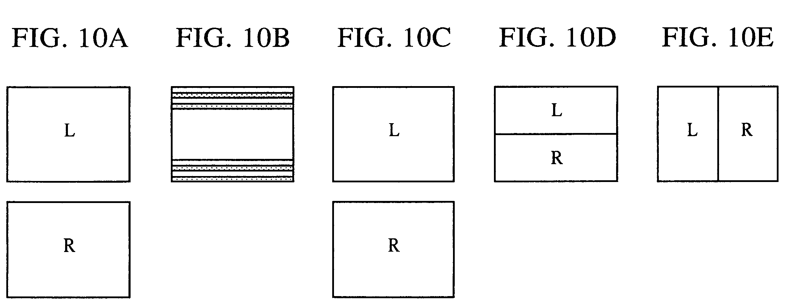

In the two input format, as shown in Fig. 10A, a left image L and a right image R are independently generated and displayed. As shown in Fig. 10B, in the line sequential format, the odd lines and even lines of pixels in each of the left image L and the right image R are extracted, such that the left image L and the right image R are alternately arranged and displayed every line. In the page flipping format, as shown in Fig. 10C, the left image L and the right image R are alternately provided and displayed in time. In the above-and-below format, as shown in Fig. 10D, the left image L and the right image R each having their resolution reduced by half in the up/down direction are vertically arranged, and displayed as a single image. In the side-by-side format, as shown in Fig. 10E, the left image L and the right image R each having their resolution reduced by half in the side-to-side direction are horizontally arranged, and displayed as a signal image.

Often, this type of stereoscopic image display apparatus is directly connected to a computer such as a personal computer (hereinafter referred to as "PC"), and is controlled by various kinds of application software. A display screen is created in advance in an image format supported by the stereoscopic image display apparatus by using the computer, and image data is input in the stereoscopic image display apparatus and is stereoscopically displayed.

For example, in a stereoscopic image display apparatus supporting the page flipping format, portions of a left-eye image and a right-eye image which are desired to be stereoscopically displayed are alternately input in synchronization with the refresh rate. If non-stereoscopic display portions that are not stereoscopically displayed are also presented on the same screen, the stereoscopic and non-stereoscopic display portions are displayed and output on the same screen with only the non-stereoscopic display portions being synchronized with the refresh rate.

Therefore, the stereoscopic image display apparatus provides a normal two-dimensional representation rather than a three-dimensional representation if the left-eye image and the right-eye image represent the same image.

Furthermore, the stereoscopic image display apparatus provides stereo vision on a portion in which stereo vision data is to be displayed, and provides graphical user interface (GUI) representation, which has no parallax and does not support stereo vision, on a portion in which the stereo vision data is not to be displayed, such as a GUI portion.

One exemplary stereoscopic image display apparatus supporting the line sequential format is a technique using a lenticular lens, as proposed in Japanese Unexamined Patent Application Publication No. 9-311294. In the line sequential format, an optical system is designed so that horizontal lines of images on a display screen are alternately directed to either the right eye or the left eye every line. Therefore, for example, if all even horizontal lines and odd horizontal lines are viewed by the right eye and left eye, respectively, the right-eye image is provided for the even lines, and the left-eye image is provided for the odd lines.

The GUI should be intuitive and straightforward. However, since computer display apparatuses do not support stereo vision by nature, stereoscopic perception is provided on two-dimensional displays by applying two-dimensional shading to achieve stereo vision.

While a conventional stereoscopic image display apparatus has the ability to stereoscopically display image data in an image data display region in which stereo-vision image data is displayed, it does not have the ability to provide stereo vision on a portion in which the GUI is presented. The demands on stereo vision have increased so that the portion in which the GUI is presented may also be stereoscopically displayed so as to provide stereoscopic perception.

Conventionally, a stereoscopic image display apparatus supporting the line sequential format stereoscopically displays the image of the overall display screen in the line sequential format, but cannot stereoscopically display only a portion of the image on the display screen. Moreover, it is not taken into consideration that the display position of the stereo image on the screen on which the stereo image is being displayed is changed on a window.

### SUMMARY OF THE INVENTION

Accordingly, it is an object of the present invention to realize a user interface which supports stereo vision.

Another object of the present invention is to provide a stereoscopic image display apparatus and a method of displaying image data in which an image in a specific region of a display screen can be stereoscopically displayed even if the image is stereoscopically displayed in the line sequential format.

To this end, in one aspect of the present invention, a stereoscopic image display apparatus directs an image having a parallax to each of the left and right eyes to provide binocular stereo vision. The stereoscopic image display apparatus includes a data display region on which stereo image data is displayed, a user interface region on which a plurality of icon images are displayed to control a user interface, and an operating unit for selectively operating the icon images displayed on the user interface region. The operating unit is operated to allow the icon images to be stereoscopically viewed by both eyes.

In another aspect of the present invention, a method of displaying image data includes directing an image having a parallax to each of the left and right eyes, alternately arranging a left-eye image and a right-eye image in a line sequential manner to provide binocular stereo vision, and displaying the image data within a specific data display region on a display screen on which the image data is displayed in a line sequential manner using a binocular stereopsis.

Further objects, features and advantages of the present invention will become apparent from the following description of the preferred embodiments with reference to the attached drawings.

### BRIEF DESCRIPTION OF THE DRAWINGS

Fig. 1 is a system configuration diagram of a stereoscopic image display apparatus according to one embodiment of the present invention.

Fig. 2 is a block diagram of detailed internal components of a PC.

Fig. 3 is a view of a display screen of a display.

Figs. 4A and 4B are views of right and left icon images indicating a file open button.

Figs. 5A to 5C are views each showing left-eye and right-eye icon images when the file open button is operated.

Fig. 6 is a view of a modification of the embodiment.

Fig. 7 shows a window in accordance with a second embodiment of the present invention.

Figs. 8A and 8B are views illustrating the principle of displaying image data using an HMD method.

Fig. 9 is a table depicting a list of stereo image formats.

Figs. 10A to 10E are schematic views showing display methods of the stereo image formats.

### DESCRIPTION OF THE PREFERRED EMBODIMENTS

Illustrative embodiments of the present invention will now be described with reference to the drawings.

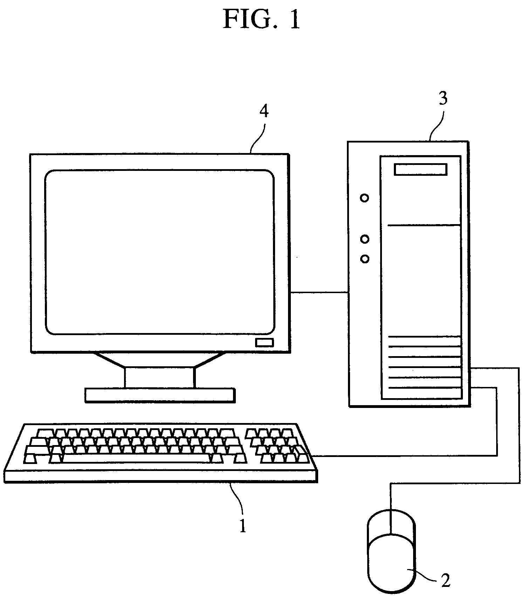

Fig. 1 is a system configuration diagram of a stereoscopic image display apparatus according to one embodiment of the present invention. The stereoscopic image display apparatus includes a keyboard 1 operated to input image data etc., a mouse 2 serving as a pointing device, a display 4 for stereoscopically displaying the image data, and a personal computer (PC) 3 for controlling the display 4 based on the information input from the keyboard 1 or the mouse 2.

The display 4 may be a raster-scan non-interlace CRT display, on which a multi-window system runs. The display 4 also supports a page flipping format as a stereo image format in the illustrated embodiment to provide binocular stereo vision of the image data.

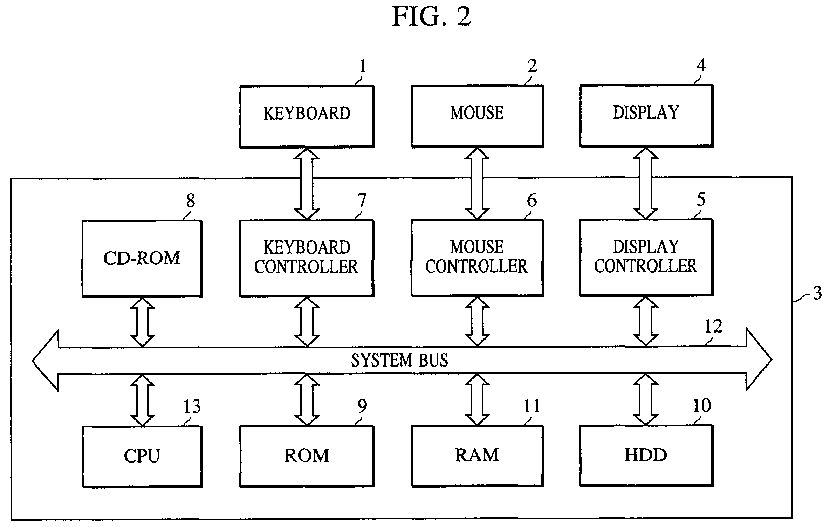

Fig. 2 is a block diagram of detailed internal components of the PC 3. The PC 3 includes a display controller 5 for controlling an interface with the display 4 and allowing for an output in a non-interlace raster scan format or in a page flipping format, a mouse controller 6 for controlling an interface with the mouse 2, a keyboard controller 7 for controlling an interface with the keyboard 1, a CD-ROM (compact disk read-only memory) 8 and an internal ROM 9 which store predetermined control data and control programs, a HDD (hard disk drive) 10 for storing the control data and results of computation, a RAM (random access memory) 11 for temporarily storing results of computation or providing a work area, and a CPU 13 connected via a system bus 12 to the components to control the overall apparatus.

The display controller 5 is allowed to provide a display in the form of windows by an operating system (OS) for controlling the overall PC 3. As used herein, the OS is Windows® 98 commercially available from Microsoft Corporation, located in Redmond, Wash., but is not limited. Any operating system capable of providing a usual GUI representation and capable of providing stereo vision of data which is received in the page flipping format could be used.

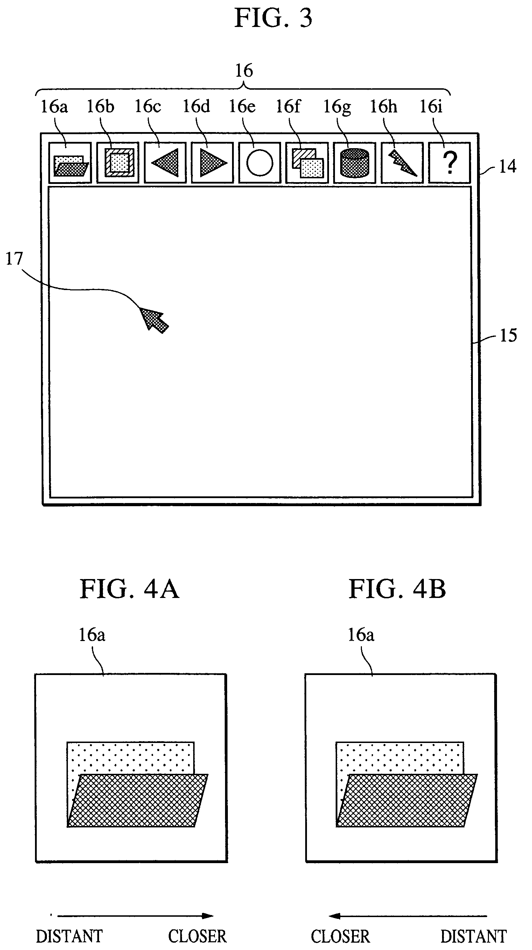

Fig. 3 is a view of an exemplary display screen of the display 4.

An application window region 14 includes a data display subregion 15 in which a variety of application-dependent data to be stereoscopically displayed, such as CG data or molecular modeling data, are stereoscopically displayed. The application window region 14 further includes a stereo button display subregion 16 having a plurality of stereo buttons (first to ninth stereo buttons 16a to 16i in the illustrated embodiment) implemented as icon representations.

The data display subregion 15 and the stereo button display subregion 16 of the application window display region 14 are stereoscopically displayed in the page flipping format in which an image having a parallax, as appropriate, is directed to each of the right and left eyes. Another window display region of the multi windows, in which the same image which is viewed by the left and right eyes is displayed in the page flipping format, provides two-dimensional vision instead of stereo vision. Reference numeral 17 indicates a mouse cursor.

The first to ninth stereo buttons 16a to 16i of the stereo button display subregion 16 have different icon images affixed thereto, and a function different depending upon applications is allocated to each of the first to ninth stereo buttons 16a to 16i.

Figs. 4A and 4B show left-eye and right-eye icon images of the first stereo button 16a, respectively. The first stereo button 16a provides a parallax difference between the left-eye image and the right-eye image, if any, and can be stereoscopically displayed. According to an operation of the first stereo button 16a, therefore, the display position of the icon image in the depth direction moves so that it can be stereoscopically displayed.

More specifically, in the illustrated embodiment, the mouse 2 can be operated to establish three states as follows:
(1) a normal state;
(2) a focusing state indicating that the mouse cursor 17 arrives at the first stereo button 16; and
(3) an ON state indicating that the first stereo button 16 is pressed by clicking the mouse 2.

The icon images are created with the parallaxes being controlled so that, when the icon images are stereoscopically displayed, they are centered in the depth direction in the normal state, and they are projected toward the viewer with respect to the normal state in the focusing state and projected away from the viewer with respect to the normal state in the ON state.

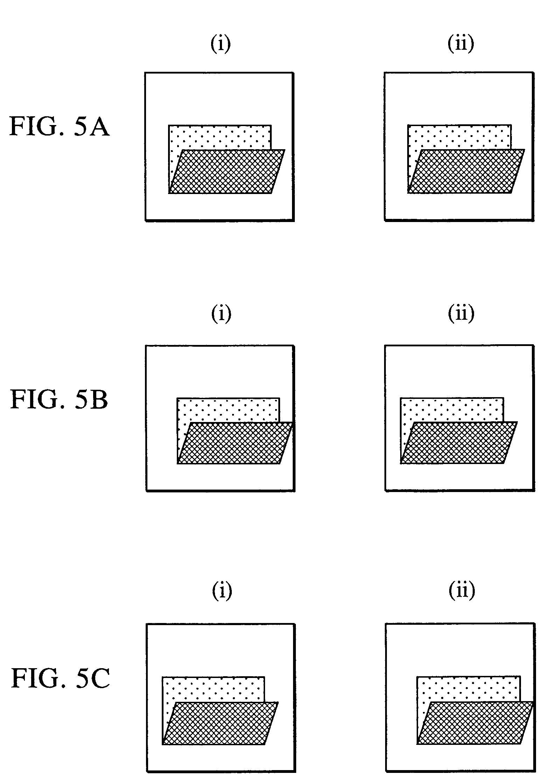

For example, the left-eye and right-eye icon images are created, respectively, at the positions shown in views (i) and (ii) of Fig. 5A in the normal state, and at the positions shown in views (i) and (ii) of Fig. 5B in the focusing state, and at the positions shown in views (i) and (ii) of Fig. 5C in the ON state.

When the left and right icon images overlap, i.e., the first stereo button 16a is observed with the left and right eyes, the left and right icon images which have been created at the center of the first stereo button 16a are viewed on the same plane as the display screen (see views (i) and (ii) of Fig. 5A). The icon images which have been created inside the center of the first stereo button 16a would be viewed as being projected toward the viewer from the display screen (see views (i) and (ii) of Fig. 5B). The icon images which have been created outside the center of the first stereo button 16a would be viewed as being projected away from the viewer with respect to the display screen (see views (i) and (ii) of Fig. 5C).

The displays are determined according to the mouse event on the first stereo button 16a. If the mouse 2 moves to the first stereo button 16a from the normal state where it is not located on the first stereo button 16a, the display of the focusing state is changed over. If the first stereo button 16a is pressed by clicking the mouse 2 in the focusing state, the display of the ON state is then changed over. If the mouse 2 moves apart from the first stereo button 16a, the display of the normal state is then changed over.

Normally, the mouse cursor 17 has a depth position located in the position as viewed on the same plane as the display of the stereo button 16 in the normal state. When the mouse cursor 17 overlaps the stereo button 16, the stereo button 16 is in the focusing position to project the position in depth toward the viewer. This makes the depth position of the mouse cursor 17 to be deeper than the position of the stereo button 16, providing a strange display. In order to avoid this circumstance, the parallax of the mouse cursor 17 is also controlled in the focusing state so that it may be displayed in front of the stereo button 16.

Accordingly, in the illustrated embodiment, the normal states of the stereo buttons 16a to 16i are set as reference positions. Then, the icon images are displayed with the parallaxes being controlled so that the icon images are projected toward the viewer from the reference positions in the focusing state where the mouse cursor 17 overlaps the stereo buttons 16a to 16i, and the icon images are projected away from the viewer with respect to the reference positions when the mouse 2 is activated in the focusing state, while the mouse cursor 17 is always positioned in front of the icon images of the stereo buttons 16a to 16i. Therefore, a more intuitive and straightforward GUI can be realized.

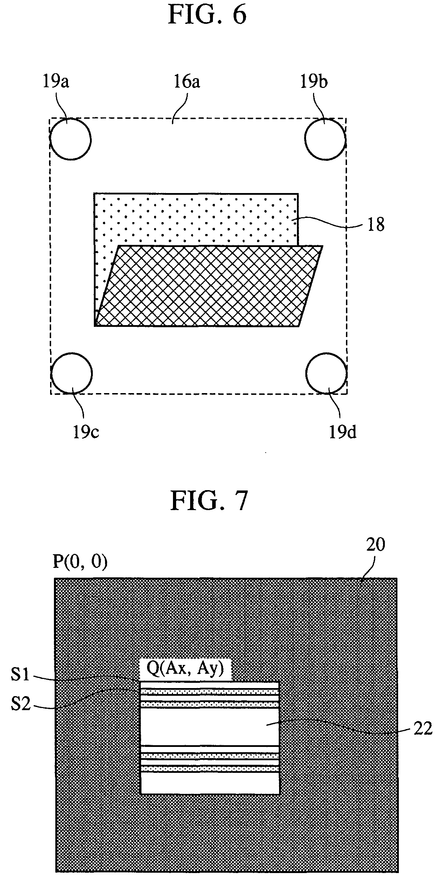

Fig. 6 illustrates a modification of the illustrated embodiment, in which marker images 19a to 19d are provided in the four corners of the first stereo button 16a in order to provide more significant stereo vision.

In order to display the left-eye icon image and the right-eye icon image at the same position when overlapping each other, the marker images 19a to 19d are displayed in the four corners on the display screen. Thus, even if the state of the first stereo button 16a changes and the symbol or an icon image 18 is projected toward and away from the viewer in a three-dimensional manner, the marker images 19a to 19d are displayed at the same position. This provides a more straightforward representation of stereoscopic perception as if the first stereo button 16a were projected toward and away from the viewer with reference to the marker images 19a to 19d. Preferably, the marker images 19a to 19d uses a color having a higher brightness than the background and has a round shape, thereby providing more remarkable stereoscopic perception.

The background other than the icon image 18 in the first stereo button 16a and the four corners which are labeled with the marker images 19a to 19d of the first stereo button 16a is preferably darker, more preferably black, thereby providing stereo vision as if the icon image 18 and the marker images 19a to 19d appeared floating. More significant stereoscopic perception can be thus achieved.

The number of states of the stereo buttons 16a to 16i are not limited to three, and may increase, if desired.

A stereoscopic image display apparatus supporting the page flipping format has been described in the illustrated embodiment. However, the present invention also encompasses a stereoscopic image display apparatus supporting the line sequential format.

The stereoscopic image display apparatus supporting the line sequential format includes a lenticular sheet or a light polarizing film which is affixed to a liquid crystal panel so that the even lines and the odd lines on the liquid crystal are separately directed to the left eye and the right eye (or vice versa), respectively. The portion in which the right-eye display and left-eye display are alternately arranged in a line sequential manner is stereoscopically displayed.

Therefore, it is only required that the left-eye image and the right-eye image be arranged in the icon image of the stereo button display subregion 16 so as to have polarities matched for each line, and a single image formed by synthesizing the images alternately arranged in a line sequential manner may be merely prepared in advance according to the states.

In the stereo buttons 16a to 16i, the parallax of the mouse cursor 17 is also controlled in the focusing state so that it is positioned in front of the stereo buttons 16a to 16i, in which left and right images are once created, and the left and right images are synthesized in the line sequential manner, and the resulting image is displayed.

Images of mouse cursor 17 are synthesized so that the left and right polarities may be correct according to the absolute coordinate position of the mouse cursor 17, that is, so that left and right images of the mouse cursor 17 which are the same are created and the depth is adjusted according to the amount of offset when the images are synthesized in the line sequential manner so that correct parallaxes of the mouse cursor 17 may be obtained, and the resulting image is displayed.

If a multi-window system runs on the computer, left and right display images is formed in the line sequential format only on a window region (partial region) on the display screen, so that partial stereo vision may be provided.

However, as a window implemented as a stereo region moves, the left and right polarities of stereo vision may be possibly reversed depending upon the display position. As a result, the left and right settings in the line sequential format, and the left and right display images may be reversed. Therefore, the window display position with respect to the stereo display in the partial region cannot be changed.

This disadvantage is overcome by a second embodiment of the present invention. While the window position is always reviewed, the image data within the window or the display content of each of the stereo buttons 16a to 16i is rewritten so that the display characteristic within the window may be correctly displayed. Accordingly, not the overall screen but only a desired window region may be used as the stereo vision region. If a window stereoscopically displayed as the stereo vision region moves, it can be viewed as the desired stereo image.

The stereoscopic image display apparatus according to the second embodiment includes a left screen and a right screen alternately arranged in a line-by-line basis on the horizontal lines on a bitmap within a predetermined display region on the display screen so as to match the left and right polarities of the display. Then, these screens are synthesized, and the resulting screen is displayed, thereby providing stereo vision only within the predetermined display region. Specifically, a left-eye screen and a right-eye screen are correctly arranged on the even lines and the odd lines, respectively, to synthesize and display the screens within the window region, thereby providing stereoscopic display of the window region. The polarities of stereopsis are arbitrary, in which the odd lines may be displayed as the right-eye screen and the even lines may be displayed as the left-eye screen, by way of example.

Fig. 7 shows a window screen in which images are synthesized in the line sequential format according to the second embodiment. Where the origin P on a display screen 20 is expressed by the coordinate (0, 0) and arbitrary coordinate R (x, y) is given, the right-eye image is displayed if the y-coordinate is odd, and the left-eye image is displayed if the y-coordinate is even.

Where the origin Q (Ax, Ay) of a stereo window region 22 to be stereoscopically displayed is given, the first line S1 of the stereo window region 22 represents the left-eye image, and the next line S2 represents the right-eye image.

The stereo data is processed so that left and right stereo images which are prepared in advance with parallaxes set according to the display 4 are synthesized in the line sequential format and the resulting image is displayed in the data display region 22. That is, where the starting coordinate Q(Ax, Ay) of the data display region 22 is given and the relative coordinate (x, y) from the starting coordinate (Ax, Ay) of the data display region 22 is used as arbitrary coordinate, the absolute coordinate (Ax + x, Ay + y) of the arbitrary coordinate in the data display region 22 is found. Therefore, the left and right images are synthesized in the line sequential format so that the right image is displayed if (Ay + y) is odd and the left image is displayed if (Ay + y) is even.

Whenever the mouse 2 is used to move the window position on the display screen 20, the absolute coordinate position of Ay is reviewed. If Ay is odd, the right and left images are synthesized in the line sequential manner so that the right image is displayed if (Ay + y) is odd, and the left image is displayed if (Ay + y) is even (in the second embodiment, the state where Ay is odd is called positive polarity).

If Ay is even, on the other hand, the left and right images are synthesized in the line sequential manner so that the left image is displayed if (Ay + y) is odd and the right image is displayed if (Ay + y) is even (in the second embodiment, the state where Ay is even is called reverse polarity).

Due to a large load if the images are synthesized in the line sequential format each time the window moves, images which are synthesized in the line sequential format with the positive polarity and with the reverse polarity may be prepared in advance, such that it is determined to use either the images whenever the position of the Ay coordinate is reviewed.

According to the second embodiment, the icon images of the stereo buttons 16a to 16i each have left-eye and right-eye icon images separately provided in advance. The images are synthesized in the line sequential format with the correct polarities depending upon the position of the icon images when displayed, and the resulting image is displayed.

If the data display region 22 moves on the display screen 20, the y coordinate of the movable window is fixed to either the even coordinate or the odd coordinate, making it possible to use only the data display region 22 as a stereoscopic image display region. Therefore, if the stereoscopically displayed window moves, a stereo image can be displayed on the data display region 22 that has moved.

That is, the image data which are synthesized in advance in the line sequential format so that the odd lines correspond to the right-eye image and the even lines correspond to the left-eye image is invoked from application software. When the image data is displayed on the data display region 22, if the starting coordinate (X, Y) of the display screen 20 is given, and the starting coordinate (Ax, Ay) of the data display region 22 is given, where Y-Ay = H, H is always constant so that Ay always corresponds to the odd lines. For example, if H is even, the y coordinate of the display screen 20 cannot be selected so that Y may be always odd. This means that the window position is controlled so that the starting coordinate Y of the display screen 20 is always odd when the display screen 20 is initially displayed on the screen and moves.

Whenever the window position moves on the display screen 20 using the mouse 2, the y coordinate position is reviewed. Nothing is done if Y is odd, and if Y is even, the y coordinate of the display position on the display screen 20 increments by "1" (or decrements by "1") to make Y odd.

While the even lines and the even lines are set left and right as the left and right polarities, respectively, the even lines and the even lines may be set right and left, respectively.

With respect to the mouse cursor 17, the y coordinate position may not be always odd, but mouse cursor images synthesized in the line sequential format with the left and right polarities different according to the y coordinate may be prepared. Therefore, each time the mouse cursor 17 moves, the left and right polarities are changed over so that the mouse cursor 17 may be avoided from discontinuously moving.

As specifically described above, according to the illustrated embodiments, a straightforward user interface which takes advantage of a stereo display apparatus can be achieved. An apparatus supporting the line sequential format would provide correct stereo vision within the window, and can also provide it even if the window position moves.

Furthermore, the stereo vision data having predetermined right and left polarities which are prepared as images in the line sequential format are used to control the window position of the application so that either the even lines or the even lines of the respective display starting positions is constant. Therefore, stereo vision with correct polarities is provided in the window, and stereo vision with correct polarities within the window can be always provided if the window position moves.

While the present invention has been described with reference to what are presently considered to be the preferred embodiments, it is to be understood that the invention is not limited to the disclosed embodiments. On the contrary, the invention is intended to cover various modifications and equivalent arrangements included within the spirit and scope of the appended claims. The scope of the following claims is to be accorded the broadest interpretation so as to encompass all such modifications and equivalent structures and functions.

## Claims

1. An image display apparatus which directs an image having a parallax to each of the left and right eyes to provide binocular stereo vision, comprising:
display means having a data display region on which stereo image data is displayed, and a user interface region on which a plurality of icon images are displayed to control a user interface; and
operating means for selecting the icon images displayed on the user interface region in said display means,
wherein said operating means is operable to stereoscopically display the icon images.

2. An image display apparatus according to Claim 1,
wherein the position of the icon images in the depth direction visually changes according to the operation of said operating means.

3. An image display apparatus according to Claim 2,
wherein said operating means is operated to set the icon images at one of a normal state where the icon images are displayed on a display screen, a focusing state where the icon images are projected toward to a viewer with respect to the normal state, and an ON state where the icon images are projected away from the viewer with respect to the normal state.

4. An image display apparatus according to Claim 3,
wherein said operating means comprises a pointing device.

5. An image display apparatus according to Claim 3,
wherein marker images are displayed at predetermined positions in an image display region of each of the icon images.

6. An image display apparatus according to Claim 5,
wherein the marker images are displayed in the four corners of the image display region.

7. An image display apparatus according to Claim 5,
wherein the marker images are circular.

8. An image display apparatus according to Claim 5,
wherein the marker images are displayed by a color having different brightness from that of the background of each of the icon images.

9. An image display apparatus comprising:
display means which directs an image having a parallax to each of the left and right eyes and alternately arranges a left-eye image and a right-eye image in a line sequential manner to provide binocular stereo vision; and
display control means for controlling said display means to display image data only within a specific data display region on a display screen, on which the image data is displayed, in a line sequential manner using binocular stereo vision.

10. An image display apparatus according to Claim 9, further comprising:
moving means for moving the specific data display region.

11. An image display apparatus according to Claim 10,
wherein said moving means sets the lines of the specific data display region at one of the odd lines and the even lines.

12. An image display apparatus according to Claim 11,
wherein the image data displayed in the specific data display region is synthesized in a line sequential manner, and the resulting image data is stored in advance.

13. An image display apparatus according to Claim 12,
wherein the display polarities of the left-eye image and the right-eye image in which the images are displayed in a line sequential manner are controlled so as to provide predetermined binocular stereo vision.

14. A method of displaying image data including directing an image having a parallax to each of the left and right eyes to provide binocular stereo vision, said method comprising:
a first step of displaying stereo image data on a data display region, and of displaying a plurality of icon images on a user interface region; and
a second step of stereoscopically displaying the icon images displayed on the user interface region with both eyes according to the operation of operating means.

15. A method according to Claim 14,
wherein said second step includes visually changing the position of the icon images in the depth direction according to the operation of the operating means.

16. A method according to Claim 15,
wherein the icon images are set according to the operation of the operating means at one of a normal state where the icon images are displayed on a display screen, a focusing state where the icon images are projected toward a viewer with respect to the normal state, and an ON state where the icon images are projected away from the viewer with respect to the normal state.

17. A method according to Claim 14,
wherein the operating means comprises a pointing device.

18. A method according to Claim 16, further comprising:
displaying marker images at predetermined positions in an image display region of each of the icon images.

19. A method according to Claim 18,
wherein the marker images are displayed in the four corners of the image display region.

20. A method according to Claim 18,
wherein the marker images are circular.

21. A method according to Claim 18,
wherein the marker images are displayed by a color having different brightness from that of the background of each of the icon images.

22. A method of displaying image data, comprising:
a first step of directing an image having a parallax to each of the left and right eyes and alternately arranging a left-eye image and a right-eye image in a line sequential manner to provide binocular stereo vision; and
a second step of displaying image data only within a specific data display region on a display screen, on which the image data is displayed, in a line sequential manner using binocular stereo vision.

23. A method according to Claim 22, further comprising:
a third step of performing a moving operation to move the specific data display region.

24. A method according to Claim 23,
wherein the moving operation includes setting the lines of the specific data display region at one of the odd lines and the even lines.

25. A method according to Claim 23,
wherein the image data displayed in the specific data display region is synthesized in a line sequential manner, and the resulting image data is stored in advance.

26. A method according to Claim 22, further comprising
controlling the display polarities of the left-eye image and the right-eye image in which the images are displayed in a line sequential manner so as to provide predetermined binocular stereo vision.

27. A display apparatus comprising:
a display device capable of displaying image information and an index corresponding to a predetermined function on a screen;
an operating unit for moving a cursor displayed on the screen of said display device;
an image processing unit for controlling the index so as to be stereoscopically displayed; and
a control unit for controlling said image processing unit according to the moving position of the cursor, and for changing stereoscopic display of the index when said operating unit moves the cursor to perform a predetermined operation on the index.

28. A display apparatus according to Claim 27,
wherein said control unit changes the stereoscopic display of the index depending upon when the cursor is positioned on the index and when clicking the index.

29. A display apparatus according to claim 28,
wherein said control unit switches displays in which the stereoscopic display of the index is projected toward a viewer and away from the viewer depending upon when the cursor is positioned on the index and when clicking the index.

30. A data carrier carrying executable program instructions and data for causing a computer to control execution of each of the steps of any of the methods defined in claims 14 to 26.

31. A computer for operating display means and having memory means encoded with executable program instructions and data to control execution of each of the steps of any of the methods defined in claims 14 to 26.
